**Europäisches Patentamt**

**European Patent Office**

**Office européen des brevets**

(19)

(11) Numéro de publication: **0 100 262**
**A1**

(12) # DEMANDE DE BREVET EUROPEEN

(21) Numéro de dépôt: **83401411.0**

(22) Date de dépôt: **07.07.83**

(51) Int. Cl.³: **G 06 F 3/037**

(30) Priorité: **26.07.82 FR 8213014**

(43) Date de publication de la demande: **08.02.84**
**Bulletin 84/6**

(84) Etats contractants désignés: **AT BE CH DE GB IT LI LU NL SE**

(71) Demandeur: **TRAITEMENT D'IMAGE ET GRAPHIQUE ELECTRONIQUE dite TIGRE, Centre Administratif des Sept Mares, F-78310 Elancourt-Maurepas (Yvelines) (FR)**

(72) Inventeur: **Ragot, Guy, 28, avenue du Vercors, F-78310 Maurepas (Yvelines) (FR)**

(74) Mandataire: **Bloch, Robert et al, 39 avenue de Friedland, F-75008 Paris (FR)**

(54) **Procédé de traitement et de manipulation d'images et console pour la mise en oeuvre du procédé.**

(57) La console de l'invention comprend un calculateur (4), contenant les informations d'images à visualiser, un processeur d'adressage aléatoire (9) pour introduire dans une mémoire (12) les images du calculateur, un moniteur (14) pour visualiser les images, un processeur de traçage de contours (6) pour ne retenir que les informations utiles des images, et d'autres processeurs pour effacer de la mémoire (12) les informations non utiles, conformément au procédé de l'invention. Avec l'opérateur (17), ces équipements forment un circuit fermé permettant à l'utilisateur de mettre en oeuvre lui-même le procédé.

La console s'applique bien aux domaines médical et spatial.

## Procédé de traitement et de manipulation d'images et console pour la mise en oeuvre du procédé.

La présente invention concerne tout d'abord un procédé de traitement et de manipulation d'images.

Les techniques d'imagerie sont maintenant utilisées depuis un certain temps par exemple dans les domaines médical et spatial, en particulier pour s'affranchir des flous des clichés transmis ou encore pour visualiser en analogique des images transmises par satellite.

On avait déjà proposé d'introduire dans une mémoire d'images toutes les informations transmises par un calculateur et de visualiser les informations de la mémoire pour voir l'image désirée.

Le transfert des informations du calculateur à la mémoire d'image s'effectuait par un processeur séquentiel, dit processeur pipe-line.

Un tel procédé présentait un inconvénient.

La visualisation d'informations utiles exigeait la mise en mémoire préalable d'informations sans intérêt. En d'autres termes, tous les points d'une image étaient stockés, même si l'information utile ne représentait qu'une partie de l'image. Il en résultait l'inconvénient d'avoir à disposer d'une mémoire d'images de très grande taille.

On a alors plus récemment proposé un procédé de traitement, dans lequel, après avoir introduit une image dans une mémoire, des contours d'informations de l'image sont prédéterminés, les seules informations associées aux contours prédéterminés sont introduites à nouveau dans la mémoire, et l'image d'ensemble précédemment introduite est effacée de la mémoire.

Toutefois ce dernier procédé, s'il permet déjà de réduire la capacité de l'unité mémoire, présente néanmoins encore un inconvénient puisque les contours y sont prédéterminés et qu'il n'est donc pas certain que les informations stockées soient réellement utiles, et inversement, que toutes les informations utiles le soient. En d'autres termes, ce procédé manque de souplesse, ou est pour le moins rigide à cause de la prédétermination des contours.

La présente invention vise à pallier ce dernier inconvénient.

A cet effet, elle concerne un procédé de traitement et de manipulation d'images, dans lequel on introduit dans une mémoire d'images des informations d'images à visualiser, et, après avoir introduit une image dans la mémoire, on introduit à nouveau dans la mémoire d'images les seules informations de l'image associées à des contours, puis on efface de la mémoire l'image d'ensemble précédemment introduite, procédé caractérisé par le fait qu'avant d'introduire dans la mémoire les seules informations de l'image associées aux dits contours, on visualise l'image d'ensemble introduite, et on détermine usuellement les dits contours des seules informations utiles de l'image.

Grâce au procédé de l'invention, la place tout d'abord occupée dans la mémoire par les informations vraiment non utiles et ensuite effacées devient disponible, si bien que pour une taille déterminée de mémoire, l'invention permet d'en accroître d'autant la capacité. Ou encore, pour une capacité déterminée de mémoire, l'invention permet d'en réduire d'autant la taille. Par ailleurs les contours ne sont plus prédéterminés mais usuellement déterminés par un opérateur, ce qui est bien entendu très intéressant, puisqu'on est sûr que les seules informations stockées sont vraiment utiles.

La présente invention concerne également une console pour le traitement et la manipulation d'images, comprenant un calculateur, ou source d'informations, une mémoire
d'images, un processeur, entre le calculateur et la mémoire d'images, pour introduire dans la mémoire  les informations du calculateur, et un appareil de visualisation, à la sortie de la mémoire d'images, à la disposition d'un opérateur.

Conformément à l'invention, la console est caractérisée
par le fait que le processeur est un processeur d'adressage aléatoire et elle comporte un deuxième processeur
pour le traçage de contours, qui est relié aux entrées
du calculateur et du processeur d'adressage et qui est
commandé par l'opérateur.

La console de l'invention comporte ainsi une boucle fermée sur l'opérateur, entre l'appareil de visualisation
et le processeur de traçage. L'opérateur joue donc un
rôle essentiel dans l'utilisation de la console. En outre, entre un appareil de visualisation et un processeur,
l'opérateur peut être l'utilisateur lui-même, dialoguant
directement avec la console en fonction des objectifs
visés. Il s'agit ici d'un avantage important de l'invention.

La présente invention sera mieux comprise à l'aide de la
description suivante d'une forme de réalisation préférée
de la console de l'invention et de son principe de fonctionnement, en référence aux dessins annexés, sur lesquels :
- la figure 1 représente un bloc-diagramme de la console
  de l'invention, et
- la figure 2 illustre schématiquement le principe de
  fonctionnement en boucle fermée de la console de l'invention.

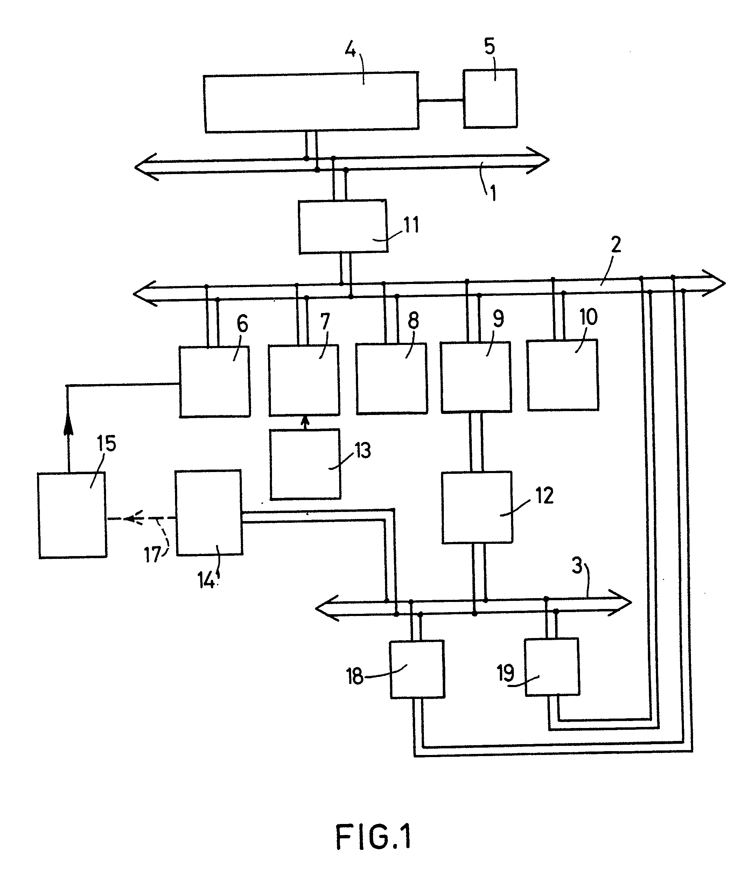

La console de traitement et de manipulation d'images,
représentée sur la figure 1, comporte trois bus de données 1, 2, 3, auxquels sont connectés les équipements et appareils ci-dessous, tous connus en soi et dont la structure ne sera donc pas décrite.

La console comporte un calculateur 4, avec son poste terminal 5, qui constitue la source d'informations de la console, et qui est connecté au bus 1, dit bus du calculateur.

Une batterie de cinq processeurs 6, 7, 8, 9, 10 sont connectés au bus 2, dit bus de processeurs. Les cinq processeurs sont agencés pour que chacun de ceux-ci puisse être maître du bus 2.

Une mémoire 11 de coordination des processeurs est connectée entre le bus du calculateur 1 et celui des processeurs 2. C'est un organe de pure transition.

Le processeur 9 est un processeur d'adressage aléatoire, qui est connecté à l'entrée d'une mémoire d'images matricielle 12, de très grande capacité, pouvant atteindre plusieurs milliards d'octets.

Le processeur 6 est un processeur de traçage de contours.

Le processeur 7 est un processeur programmable de dialogue et de gestion de la console. A son entrée est connecté un pupître 13, pourvu d'un écran, d'un clavier et d'un stylographe sensible à la lumière, dit light pen.

Le processeur 8 est encore un processeur opératoire, mais pouvant dialoguer ou non avec le reste de la console, dans la mesure où les programmes élaborés dans le processeur 7 peuvent y être introduits et repris à titre de préprogrammes.

Le processeur 10 est un processeur de tracés graphiques en mode vectoriel. Il coopère avec le processeur de traçage de contours 6 pour commander la mémoire 12 et y inscrire les seules informations utiles dans les zones de la mémoire affectées à cet effet.

La sortie de la mémoire 12 est connectée à l'entrée d'un appareil de visualisation, ou moniteur, 14, par le bus 3.

L'entrée du processeur 6 est connectée à une tablette à digitaliser 15, dont la fonction est l'inverse de celle d'une table traçante, éventuellement combinée à une boule roulante ou à un manche à balai, par exemple, pour le déplacement des zones d'informations utiles.

L'opérateur, symbolisé par la ligne en tirets 17, entre le moniteur 14 et la tablette 15, commande la tablette 15 en fonction des images apparaissant sur le moniteur 14. L'opérateur 17 commande et contrôle également le pupître 13 et le processeur 8.

Par le bus 3, dit bus de la mémoire, la sortie de la mémoire 12 est connectée à des processeurs de traitement en temps réel, en l'occurence deux processeurs 18, 19. Ils sont connectés au bus 2 des processeurs pour fonctionner sur ordre du pupître 13. Ils permettent notamment le filtrage d'images, ou convolution, toute combinaison d'images, le zoom continu, etc.

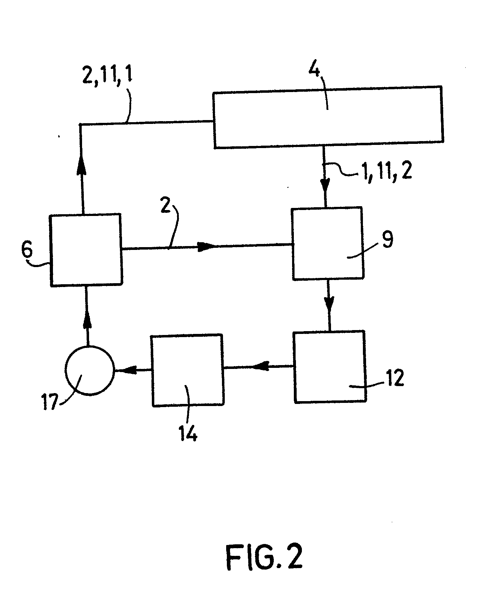

Le fonctionnement de la console décrite ci-dessus est décrit ci-dessous, en référence à la figure 2 :

Les informations d'images étant disponibles dans le calculateur 4, elles sont transmises par le processeur d'adressage aléatoire 9, et via le bus 1, la mémoire de coordination 11 et le bus 2, à la mémoire 12 et visualisées sur le moniteur 14.

A l'aide de la tablette 15, l'opérateur 17 détermine le ou les contours des informations utiles de chaque image. Par l'intermédiaire du processeur de traçage de contours 6, connecté au calculateur 4, par les bus 2 et 1 et la mémoire 11, et au processeur 9, par le bus 2, les informations contenues à l'intérieur, ou à l'extérieur, des contours ainsi usuellement déterminés, sont à nouveau introduites dans la mémoire d'images 12. Les autres informations de l'image considérée, sans intérêt pour l'utilisateur et donc à rejeter, sont ensuite effacées de la mémoire 12.

La console décrite ci-dessus est organisée autour de l'opérateur. Celui-ci est disposé dans un circuit fermé comprenant le calculateur, le processeur d'adressage aléatoire, la mémoire d'image, le moniteur et l'équipement de traçage de contours. Son agencement est remarquable par le fait que l'opérateur peut facilement être l'utilisateur lui-même.

En outre grâce à la présence des bus de données du calculateur, des processeurs et de la mémoire, la console peut être facilement contrôlée et commandée à distance, ce qui permet un diagnostic et une reconfiguration du système à distance.

Bien entendu, la console de traitement et de manipulation d'images décrite ci-dessus peut aussi bien fonctionner en noir et blanc, comme dans l'exemple décrit, qu'en couleur.

Enfin, d'autres équipements connus peuvent être connectés aux différents bus de données de la console décrite ci-dessus, connus du spécialiste, pour accroître les performances de la console, sans pour autant sortir du cadre de la présente invention.

On a décrit une mémoire 12 connectée, par le bus 3, et au moniteur 14 et à l'ensemble de traitement en temps réel (18, 19). Il est clair que cette mémoire pourrait n'être connectée qu'au moniteur 14, dans une console de performances plus réduites.

REVENDICATIONS :

1.- Procédé de traitement et de manipulation d'images, dans lequel on introduit dans une mémoire d'images des informations d'images à visualiser, et, après avoir introduit une image dans la mémoire, on introduit à nouveau dans la mémoire d'images les seules informations de l'image associées à des contours, puis on efface de la mémoire l'image d'ensemble précédemment introduite, procédé caractérisé par le fait qu'avant d'introduire dans la mémoire les seules informations de l'image associées aux dits contours, on visualise l'image d'ensemble introduite, et on détermine usuellement les dits contours des seules informations utiles de l'image.

2.- Console de traitement et de manipulation d'images, comprenant une source d'information d'images (4), une mémoire d'images (12), un processeur (9), entre la source (4) et la mémoire (12), pour introduire dans la mémoire les informations de la source, et un appareil de visualisation (14), à la sortie de la mémoire (12) et à la disposition d'un opérateur (17), caractérisée par le fait que la source (4), le processeur (9), la mémoire (12) et l'appareil de visualisation (14) forment un circuit fermé sur l'opérateur (17).

3.- Console selon la revendication 2, dans laquelle ledit processeur (9) est un processeur d'adressage aléatoire, et le dit circuit fermé comporte un deuxième processeur (6) pour le traçage de contours, qui est relié aux entrées de la source (4) et du processeur d'adressage aléatoire (9) et qui est commandé par l'opérateur (17).

4.- Console selon la revendication 3, dans laquelle les processeurs (6, 9) sont connectés à un bus (2) de données des processeurs, la source est un calculateur (4) connecté à un bus (1) de données du calculateur, et les deux bus (1, 2) sont connectés par une mémoire (11) de coordination des processeurs.

5.- Console selon la revendication 4, dans laquelle la mémoire d'images (12) est connectée à un bus (3) de données de la mémoire, et il est prévu des processeurs (18, 19) de traitement en temps réel connectés entre le bus de la mémoire (3) et le bus des processeurs (2).

6.- Console selon l'une des revendications 4 et 5, dans laquelle des processeurs de dialogue (7, 8) sont connectés au bus des processeurs (2).

7.- Console selon l'une des revendications 4 à 6, dans laquelle un processeur de tracés graphiques en mode vectoriel (10) est connecté au bus des processeurs (2).

8.- Console selon l'une des revendications 3 à 7, dans laquelle les processeurs sont agencés pour que chacun puisse être maître du bus des processeurs (2).

FIG.1

FIG.2

0100262

**Office européen des brevets**

## RAPPORT DE RECHERCHE EUROPEENNE

Numéro de la demande

EP 83 40 1411

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | IBM TECHNICAL DISCLOSURE BULLETIN, vol. 21, no. 3, août 1978, pages 1246-1247, New York, USA<br>I.D. JUDD et al.: "Interactive work station" * En entier * | 1-3 | G 06 F 3/037 |
| X,Y | DE-A-2 516 191 (SIEMENS AG.)<br>* Figures 1,2; revendication 1; page 1, paragraphe 2; page 2, paragraphe 3; page 3, ligne 20 - page 5, ligne 10 * | 1-3 | |
| Y | PATENTS ABSTRACTS OF JAPAN, vol. 5, no. 95, 20 juin 1981, page 767 E 62<br>& JP - A - 56 39 676 (MINOLTA CAMERA K.K.) 15-04-1981 * En entier * | 2 | **DOMAINES TECHNIQUES RECHERCHES (Int. Cl. ³)** |
| A | WO-A-8 200 903 (DR.-ING. RUDOLF HELL GmbH.)<br>* Abrégé; figure 1, pos. 1,2,3,4,7,8,48,49,50; revendications 7,8,13,15 * | 1-5 | G 06 F<br>G 06 K<br>H 04 N |
| A | GEN. ELECTRICITE, tome 87, no. 1, 1er janvier 1978, pages 17-20<br>M. LOUF: "Terminaux de visualisation et de traitement d'images numérisées" * Figures 1-3 * | 1-4,6 | |

-/-

Le présent rapport de recherche a été établi pour toutes les revendications

| Lieu de la recherche | Date d'achèvement de la recherche | Examinateur |
|---|---|---|
| LA HAYE | 25-10-1983 | BECKER K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82

Office européen
des brevets

**RAPPORT DE RECHERCHE EUROPEENNE**

| **DOCUMENTS CONSIDERES COMME PERTINENTS** | | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. 3) | |
| A | DE-A-2 420 346 (SIEMENS A.G.)<br>* Figures 1-3; page 2, lignes 24-29; revendications 1-3 *<br><br>----- | 1-3 | | |
| | | | DOMAINES TECHNIQUES RECHERCHES (Int. Cl. 3) | |
| Le présent rapport de recherche a été établi pour toutes les revendications | | | | |

| Lieu de la recherche<br>LA HAYE | Date d'achèvement de la recherche<br>25-10-1983 | Examinateur<br>BECKER K.H. |
|---|---|---|

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03.82